# FASCICULE DE BREVET EUROPEEN

(11) **EP 4 311 781 B1**
(45) Date de publication et mention de la délivrance du brevet: **09.04.2025**
(21) Numéro de dépôt: 23186215.2
(22) Date de dépôt: 18.07.2023
(51) Int. Cl.: B64F 5/10, B64C 1/18

(54) **SYSTÈME DE TRANSPORT DE GRILLE DE PLANCHER DE CABINE D'AÉRONEF EN VUE D'UN ASSEMBLAGE D'UN CORPS DE FUSELAGE D'AÉRONEF ET PROCÉDÉ DE CALIBRATION DUDIT SYSTÈME DE TRANSPORT**
KABINENBODENGITTERTRANSPORTSYSTEM FÜR EINE ANORDNUNG EINES FLUGZEUGRUMPFKÖRPERS UND VERFAHREN ZUR KALIBRIERUNG DES BESAGTEN TRANSPORTSYSTEMS
SYSTEM FOR TRANSPORTING A FLOOR GRID OF AN AIRCRAFT CABIN FOR ASSEMBLING AN AIRCRAFT FUSELAGE BODY AND METHOD FOR CALIBRATING SAID TRANSPORT SYSTEM

(30) Priorité: 25.07.2022 FR 2207611
(43) Date de publication de la demande: 31.01.2024
(73) Titulaire: Airbus Operations SAS, 31060 Toulouse (FR)
(72) Inventeur: DATAS, Jean-Marc, 31060 TOULOUSE (FR); CARTEREAU, Thomas, 31060 TOULOUSE (FR); BOURIQUET, Jacques, 31060 TOULOUSE (FR); AQUILA, André, 31700 BLAGNAC (FR); DARBONVILLE, Nicolas, 31700 BLAGNAC (FR); AUTRET, Thomas, 31700 BLAGNAC (FR); BARBOULE, Joël, 31060 TOULOUSE (FR); BAYONNE, Sébastien, 31060 TOULOUSE (FR); GUERIN, Patrick, 31060 TOULOUSE (FR); VAN DER VEEN, Sjoerd, 31060 TOULOUSE (FR)
(74) Mandataire: Gevers & Orès

(56) Documents cités:
- EP-A1- 1 063 166
- DE-A1- 102004 056 286
- FR-A1- 2 788 743

## Description

### Domaine technique

La présente invention concerne un système de transport de grille de plancher de cabine destiné à manipuler une grille de plancher de cabine d'un aéronef en vue d'un assemblage d'un corps de fuselage, sans que ladite grille ne soit déformée. La présente invention concerne également un procédé de calibration dudit système de transport.

**État de la technique** Le document DE 10 2004 056286 A1 décrit un système pour supporter une grille de plancher d'aéronef durant son montage à l'aide de quatre tours de positionnement connectées chacune à un bras. Les bras sont connectés à un cadre de positionnement équipé d'organes de fixation pour la grille de plancher.

Un corps de fuselage (« fuselage barrel » en anglais) d'un aéronef comprend généralement plusieurs éléments, en particulier, une grille de plancher de cabine (« cabin floor grid » en anglais) de l'aéronef, une coque inférieure (« lower shell » en anglais), deux coques latérales (« side shells » en anglais) et une coque supérieure (« upper shell » en anglais). Ces éléments sont fabriqués indépendamment les uns des autres et les trous permettant leur assemblage entre eux sont percés avant leur assemblage. L'assemblage de ces éléments demande donc de mettre en œuvre des techniques d'assemblage de trou-à-trou (« hole-to-hole assembly » en anglais) et/ou d'assemblage de partie-à-partie (« part-to-part assembly » en anglais) afin de s'assurer qu'ils soient bien alignés pendant l'assemblage.

Or, pendant l'assemblage des éléments, la grille de plancher peut se courber sous l'effet de sa propre masse, ce qui peut être un inconvénient pour assembler le corps de fuselage.

### Exposé de l'invention

La présente invention a pour objet de remédier à cet inconvénient. Pour cela, elle concerne un système de transport de grille de plancher d'aéronef destiné à manipuler une grille de plancher d'un aéronef en vue d'un assemblage d'un corps de fuselage.

Selon l'invention, le système de transport comprend au moins :
- un palonnier rectangulaire comprenant une face supérieure et une face inférieure, le palonnier rectangulaire présentant deux extrémités longitudinales ;
- un dispositif stabilisateur configuré pour être associé à des dispositifs référentiels de positionnement d'une plateforme d'assemblage, le dispositif stabilisateur étant fixé et réparti aux deux extrémités longitudinales du palonnier rectangulaire ;
- une pluralité de dispositifs de fixation répartis sur la face inférieure du palonnier rectangulaire configurés pour fixer la grille de plancher au palonnier rectangulaire, chacun des dispositifs de fixation comprenant un élément de fixation destiné à être fixé à la grille de plancher, chacun des dispositifs de fixation présentant une longueur d'ajustement entre l'élément de fixation et la face inférieure du palonnier rectangulaire réglable verticalement.

Ainsi, grâce à la pluralité des dispositifs de fixation qui permettent d'ajuster leur longueur, il est possible de maintenir la grille de plancher suffisamment plane pour permettre un assemblage plus facile et plus rapide du corps de fuselage, même si le palonnier rectangulaire n'est pas parfaitement plan.

De plus, chacun des dispositifs de fixation comprend en outre :
- une tige filetée présentant un axe longitudinal et traversant de part en part le palonnier rectangulaire, la tige filetée présentant une première extrémité faisant saillie sur la face supérieure du palonnier rectangulaire et une deuxième extrémité faisant saillie sur la face inférieure, la deuxième extrémité étant liée à l'élément de fixation,
- un palier fileté immobile selon un axe perpendiculaire au palonnier rectangulaire, la tige filetée étant vissée dans le palier fileté,
- un écrou de réglage vissé et solidaire à la première extrémité de la tige filetée ;
la longueur d'ajustement étant réglable verticalement par une rotation de l'écrou de réglage entraînant une rotation de la tige filetée autour de son axe longitudinal, la rotation de la tige filetée vissée dans le palier fileté entraînant un déplacement de la tige filetée selon son axe longitudinal, ledit déplacement de la tige filetée entraînant le déplacement l'élément de fixation par rapport à la face inférieure du palonnier rectangulaire.

En outre, chacun des dispositifs de fixation comprend un joint à rotule liant la deuxième extrémité de la tige filetée à l'élément de fixation.

De plus, chacun des dispositifs de fixation comprend en outre :
- un manchon cylindrique traversant perpendiculairement de part en part le palonnier rectangulaire, la tige filetée étant logée dans le manchon cylindrique, et
- une rotule disposée sur un épaulement agencé dans le manchon cylindrique et présentant un centre autour duquel la rotule est apte à entrer en rotation, la rotule étant traversée par le palier fileté, la rotule autorisant un mouvement de la tige filetée autour du centre de la rotule, ledit mouvement étant limité par le manchon cylindrique.

Par ailleurs, le dispositif stabilisateur comprend deux paires de bras escamotables disposées chacune à une extrémité longitudinale du palonnier rectangulaire, les bras escamotables de chacune des deux paires de bras s'écartant l'un par rapport à l'autre, de part et d'autre d'un plan central de symétrie, chacun des bras escamotables de chacune des deux paires étant configuré pour se trouver alternativement dans une position déployée dans laquelle le bras escamotable dépasse latéralement du palonnier rectangulaire et une position escamotée dans laquelle le bras escamotable ne dépasse pas latéralement du palonnier rectangulaire, chacun des bras escamotables comportant une extrémité libre destinée à être posée sur un dispositif référentiel de positionnement d'une plateforme d'assemblage lorsque chacun des bras escamotables se trouve dans la position déployée en vue d'un assemblage du corps de fuselage.

Selon une particularité, chacun des bras escamotables présente au moins une première partie montée coulissant au palonnier rectangulaire, une deuxième partie présentant un axe longitudinal perpendiculaire au palonnier rectangulaire et une troisième partie liant la première partie et la deuxième partie, la deuxième partie comportant l'extrémité libre destinée à être posée sur un dispositif référentiel de positionnement d'une plateforme d'assemblage.

Selon une autre particularité, le palonnier rectangulaire comprend des rails fixés sur deux côtés du palonnier rectangulaire aux extrémités longitudinales, les rails étant parallèles à la face inférieure du palonnier rectangulaire, chacun des bras escamotables comprend au moins une coulisse fixée sur la première partie, la ou les coulisses de chacun des bras escamotables étant destinées à coulisser sur au moins un rail parmi les rails fixés au palonnier rectangulaire pour passer de la position déployée à la position escamotée et vice-versa.

De plus, chacun des bras escamotables comprend un dispositif de blocage configuré pour bloquer chacun des bras escamotables alternativement dans la position escamotée ou dans la position déployée.

Par ailleurs, chacun des dispositifs de fixation comprend une cible laser configurée pour recevoir un faisceau laser d'alignement émis par d'un système d'alignement par laser destiné à évaluer une position de chacun élément de fixation de chacun des dispositifs de fixation.

En outre, le palonnier rectangulaire comprend :
- une grille rectangulaire comportant des barres de trame et des barres de chaîne,
- une structure de renforcement qui fait saillie sur la face supérieure du palonnier rectangulaire, la structure de renforcement comportant des barres en forme de U s'étendant entre les deux extrémités longitudinales, la forme de U présentant une ouverture dirigée vers la grille rectangulaire, chacune des barres en forme de U étant alignée verticalement avec une barre de chaîne de la grille rectangulaire, chacune des barres en forme de U étant fixée à la grille rectangulaire à l'aide d'entretoises à chaque croisement entre les barres de trame et les barres de chaîne de la grille rectangulaire.

L'invention concerne également un procédé de calibration du système de transport de grille de plancher de cabine tel que décrit ci-dessus.

Selon l'invention le procédé comprend les étapes suivantes :
- une étape d'installation du système de transport sur les dispositifs référentiels de positionnement par l'intermédiaire du dispositif stabilisateur,
- une première étape d'évaluation de la position de l'élément de fixation de chacun des dispositifs de fixation,
- une étape de comparaison des positions évaluées dans l'étape d'évaluation avec des positions évaluées à partir d'une simulation numérique simulant le palonnier rectangulaire déformé par sa propre masse à vide,
- une étape de réglage de la longueur d'ajustement de chacun des dispositifs de fixation à partir d'une simulation numérique simulant le système de transport déformé par sa propre masse à vide et par la grille de plancher attachée au palonnier rectangulaire,
- une étape d'attache de la grille de plancher au système de transport par l'intermédiaire des éléments de fixation,
- une deuxième étape d'évaluation de la position de l'élément de fixation de chacun des dispositifs de fixation,
- une étape d'ajustement de la longueur d'ajustement d'au moins un dispositif de fixation si la deuxième étape d'évaluation indique l'élément de fixation de tous les dispositifs de fixation ne se trouve pas dans un plan commun horizontal.

Selon une particularité, l'étape d'installation du système de transport comprend un déploiement des bras escamotables avant un dépôt de l'extrémité libre de chacun des bras escamotables sur un dispositif référentiel de positionnement.

Selon une autre particularité, la première étape d'évaluation et la deuxième étape d'évaluation sont mises en œuvre par le système d'alignement par laser émettant un faisceau laser d'alignement sur la cible laser de chacun des dispositifs de fixation.

L'invention concerne également un procédé d'installation d'une grille de plancher d'aéronef sur des dispositifs référentiels de positionnement d'une plateforme d'assemblage recevant une coque inférieure d'un corps de fuselage en vue d'un assemblage du corps de fuselage à l'aide d'un système de transport tel que décrit ci-dessus.

Selon l'invention, le procédé utilisant ledit système de transport comprend les étapes suivantes :
- une étape de mise à disposition de la grille de plancher,
- une étape de fixation de la grille de plancher à la pluralité de dispositifs de fixation,
- une étape d'installation du dispositif stabilisateur du système de transport auquel est fixée la grille de plancher sur les dispositifs référentiels de positionnement de la plateforme d'assemblage recevant la coque inférieure.

Selon une particularité, le procédé comprend en outre une étape de calibration du système de transport selon le procédé de calibration du système de transport tel que décrit ci-dessus.

### Brève description des figures

Les figures annexées feront bien comprendre comment l'invention peut être réalisée. Sur ces figures, des références identiques désignent des éléments semblables.
La figure 1 représente une vue de dessus en perspective d'une mode de réalisation du système de transport.
La figure 2 représente une vue en perspective d'un mode de réalisation du système de transport sur lequel est fixée une grille de plancher de cabine.
La figure 3 représente une vue en perspective d'un détail du système de transport centré sur un bras escamotable du système de transport.
La figure 4 représente une vue en perspective d'une plateforme d'assemblage maintenant une coque inférieure et une grille de plancher de cabine transportée par le système de transport.
La figure 5 représente une coupe longitudinale d'un dispositif de fixation du système de transport.
La figure 6 représente une vue de profil d'un côté latéral du système de transport.
La figure 7 représente une vue en perspective d'une plateforme d'assemblage sur lequel un corps de fuselage est maintenu.
La figure 8 représente une vue schématique de profil d'un aéronef comprenant un corps de fuselage.
La figure 9 représente schématiquement un ajustement des dispositifs de fixation afin de maintenir la grille de plancher plan.
La figure 10 représente une vue en perspective d'une extrémité d'un bras posée sur un dispositif référentiel de positionnement d'une plateforme d'assemblage.
La figure 11 représente schématiquement les étapes du procédé de calibration.
La figure 12 représente schématiquement les étapes du procédé d'installation.

### Description détaillée

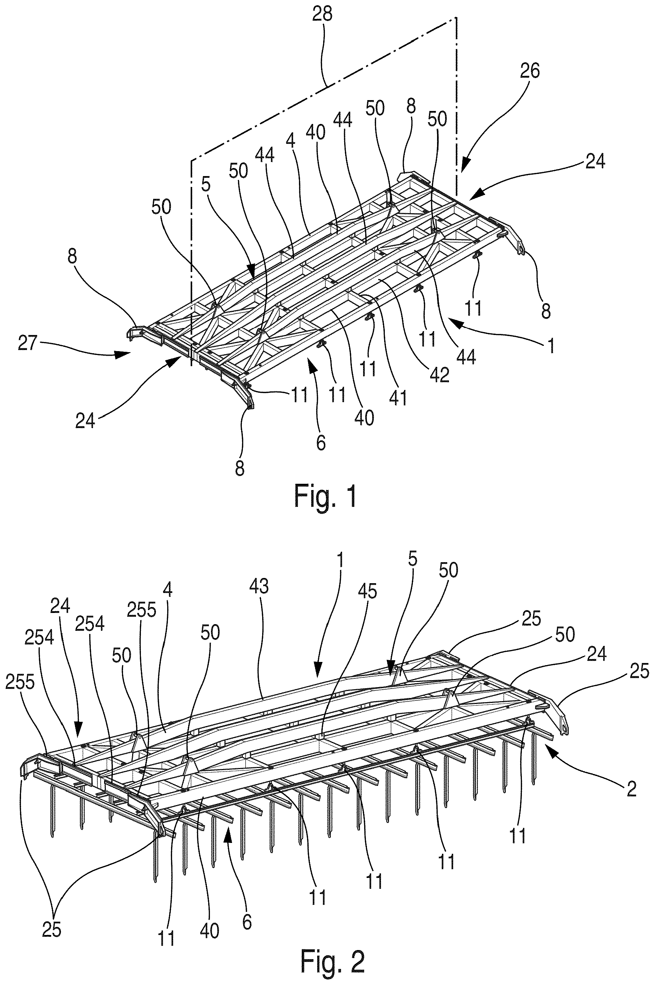

Le système de transport 1 de grille de plancher 2 est représenté sur la figure 1. Dans la suite de la description, on parlera de « système de transport 1 ».

Le système de transport 1 est destiné à manipuler une grille de plancher 1 d'un aéronef AC en vue d'un assemblage d'un corps de fuselage 3. La figure 2 représente le système de transport 1 auquel est attachée une grille de plancher 2. À titre d'exemples non limitatifs, la grille de plancher 2 peut correspondre à une grille de plancher de cabine ou une grille de plancher de poste de pilotage.

Dans la description, on appelle « plan de symétrie central » d'un objet un plan qui coupe l'objet en deux parties égales dans une direction longitudinale de l'objet. L'adjectif « latéral » qualifie une partie qui se situe d'un côté ou/et de l'autre du plan de symétrie central.

On appelle « extrémités longitudinales » d'un objet les extrémités longitudinalement opposées de l'objet. L'adjectif « vertical » et l'adverbe « verticalement » font référence à la direction de la pesanteur.

De plus, les adjectifs « supérieur » et « inférieur » sont définis par rapport au sol sur lequel le système de transport 1 est susceptible d'être déplacé. Un objet qualifié par l'adjectif « inférieur » se situe plus proche du sol qu'un objet qualifié par l'adjectif « supérieur ».

Le système de transport 1 comprend un palonnier rectangulaire 4 qui présente une face supérieure 5, une face inférieure 6 et deux extrémités longitudinales 26 et 27

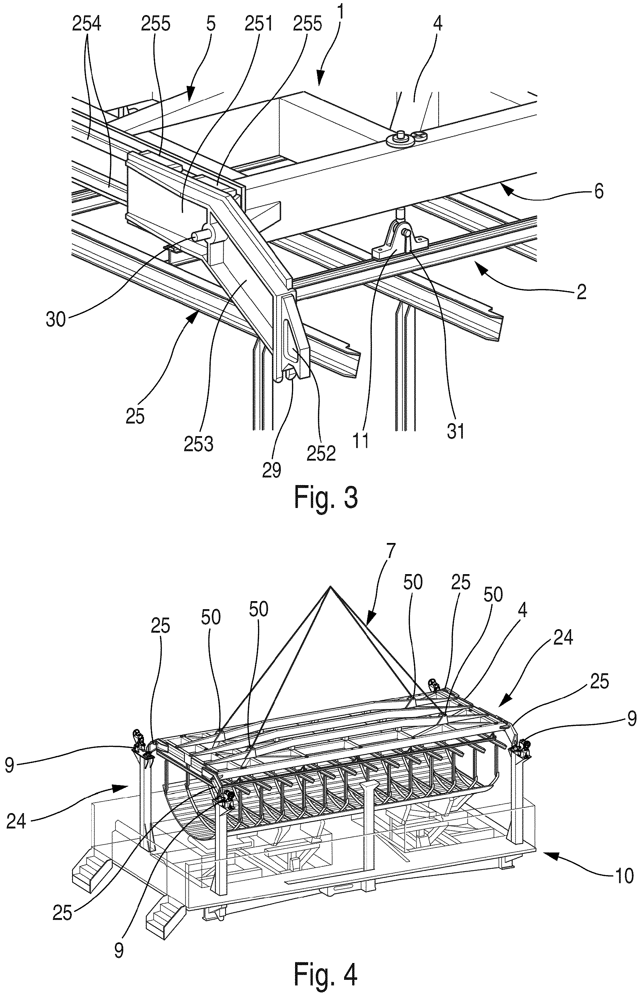

Par exemple, la face supérieure 5 est configurée pour être fixée à des élingues 7 (figure 4). Les élingues 7 permettent de lier le système de transport 1 à un système de manipulation, telle qu'une grue, afin de déplacer ou manipuler le système de transport 1. Pour fixer les élingues, la surface supérieure 5 peut comprendre des éléments de fixation 50 permettant la fixation aux élingues 7.

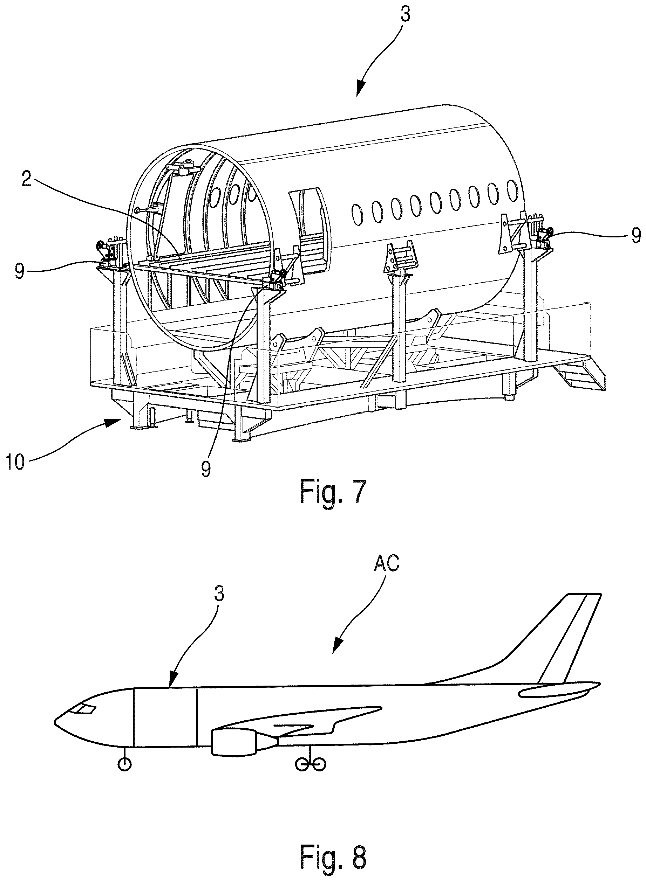

Le système de transport 1 comprend également un dispositif stabilisateur 8 configuré pour installer le système de transport 1 sur des dispositifs référentiels de positionnement 9 d'une plateforme d'assemblage 10 (figure 4, figure 7, figure 10). Le dispositif stabilisateur est fixé et réparti aux deux extrémités longitudinales 26 et 27 du palonnier rectangulaire 4.

Le système de transport comprend aussi une pluralité de dispositifs de fixation 11 répartis sur la face inférieure 6 du palonnier rectangulaire 4. Chacun des dispositifs de fixation 11 comprend un élément de fixation 12 destiné à attacher la grille de plancher 2 au palonnier rectangulaire 4. Chacun des dispositifs de fixation 11 présente une longueur d'ajustement L entre l'élément de fixation 12 et la face inférieure 6 du palonnier rectangulaire 4 réglable verticalement.

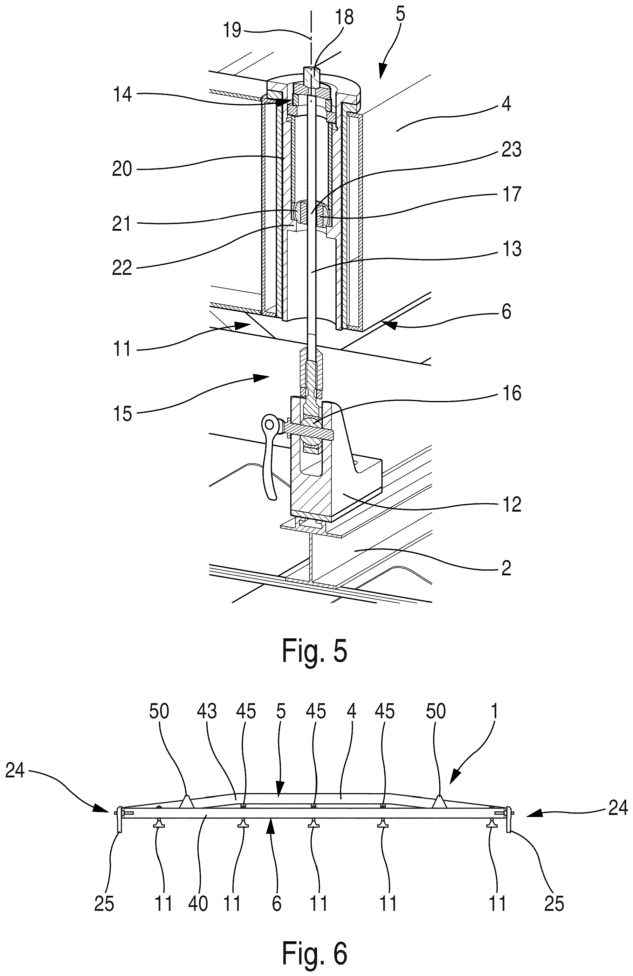

Les dispositifs de fixation 11 peuvent être répartis régulièrement en lignes dans une direction transversale du palonnier rectangulaire 4 et en colonnes dans une direction longitudinale du palonnier rectangulaire 4. À titre d'exemple non limitatif, comme représenté sur la figure 6, le système de transport 1 comprend cinq lignes de dispositifs de fixation 11. Chaque ligne de dispositifs de fixation 11 peut comprendre plusieurs dispositifs de fixation 11. Dans l'exemple de la figure 6, chaque ligne de dispositifs de fixation 11 comprend cinq dispositifs de fixation 11, ce qui correspond à cinq colonnes de dispositifs de fixation 11.

Comme représenté sur la figure 5, chacun des dispositifs de fixation 11 peut comprendre une tige filetée 13 présentant un axe longitudinal 19, un palier fileté 17 et un écrou de réglage 18.

La tige filetée 13 traverse de part en part le palonnier rectangulaire 4. La première extrémité 14 de la tige filetée 13 fait saillie sur la face supérieure 5 du palonnier rectangulaire 4. La deuxième extrémité 15 fait saillie sur la face inférieure 6 du palonnier rectangulaire 4. Le palier fileté 17 est immobile selon un axe perpendiculaire à la face inférieure 6. La tige filetée 13 est vissée dans le palier fileté 17.

L'écrou de réglage 18 est vissé à la première extrémité 14 de la tige filetée 13 et est solidaire de la première extrémité 14 de la tige filetée 13.

La longueur d'ajustement L est réglable verticalement par une rotation de l'écrou de réglage 18 solidaire de la tige filetée 13. La rotation de l'écrou de réglage 18 entraîne une rotation de la tige filetée 13 autour de son axe longitudinal 19. La rotation de la tige filetée 13 vissée dans le palier fileté 17 entraîne un déplacement de la tige filetée 13 selon son axe longitudinal 19. Le déplacement de la tige filetée 13 selon son axe longitudinal 19 entraîne alors le déplacement l'élément de fixation 12 par rapport à la face inférieure 6 du palonnier rectangulaire 4. Ainsi, la longueur d'ajustement L est réglable.

Chacun des dispositifs de fixation 11 peut également comprendre un joint à rotule 16 liant la deuxième extrémité 15 de la tige filetée 13 à l'élément de fixation 12. Ce joint à rotule 16 permet d'articuler la tige filetée 13 et l'élément de fixation 12. Il permet également de faciliter la rotation de la tige filetée 13 autour de son axe longitudinal 19 lors d'un réglage de la longueur d'ajustement L.

Par exemple, le joint rotule 16 peut comprendre une rotule fixée à la deuxième extrémité 15 de la tige filetée 13. La rotule est alors logée dans un logement de rotule de l'élément de fixation 12 afin d'articuler la tige filetée 13 à l'élément de fixation 12.

De plus, chacun des dispositifs de fixation 11 peut aussi comprendre un manchon cylindrique 20 et une rotule 21.

Le manchon cylindrique 20 traverse perpendiculairement de part en part le palonnier rectangulaire 4. La tige filetée 13 est logée dans le manchon cylindrique 20.

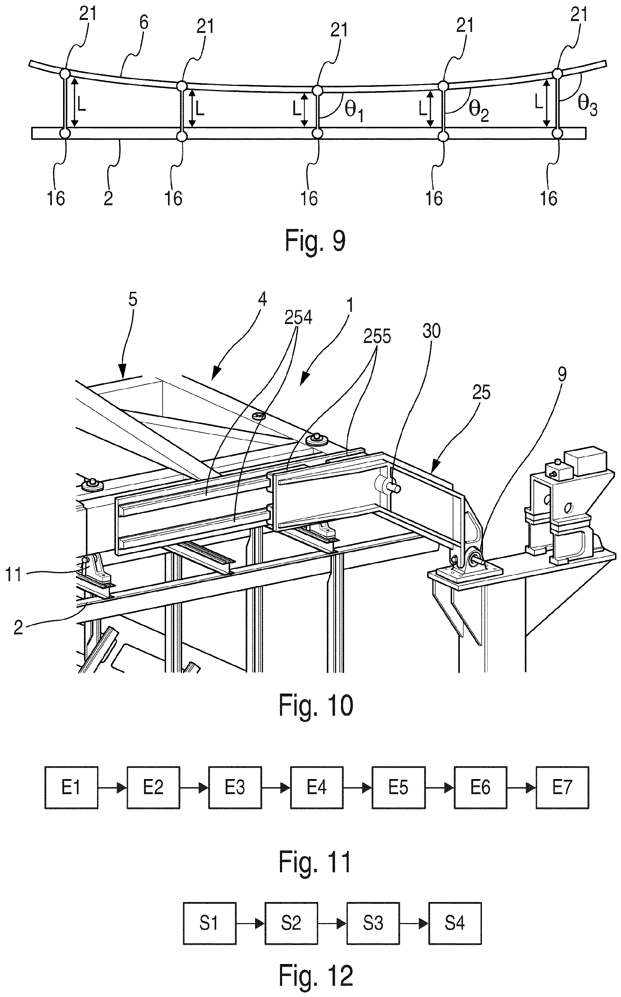

La rotule 21 est disposée sur un épaulement 22 agencé dans le manchon cylindrique 20. La rotule 21 présente un centre 23 autour duquel la deuxième rotule 21 est apte à entrer en rotation. La rotule 21 est traversée diamétralement par le palier fileté 17. La rotule 21 autorise ainsi un mouvement de la tige filetée 13 autour du centre 23 de la rotule 21. Ledit mouvement est limité par le manchon cylindrique 20. L'amplitude de mouvement de la tige filetée 13 dans le manchon cylindrique 20 sera d'autant plus importante que le rapport entre le diamètre de la section transversale du manchon cylindrique 20 et le diamètre de la section transversale de la tige filetée 13 sera grand. La rotule 21 permet de tenir compte de la courbure du palonnier rectangulaire 4 formée par sa propre masse et par la masse de la grille de plancher 4 qui est attachée au palonnier rectangulaire 4. La figure 9 illustre une telle courbure du palonnier rectangulaire 4. Grâce à la rotule 21 de chacun des dispositifs de fixation 11, l'angle entre la tige filetée 13 et la face inférieure 6 du palonnier rectangulaire peut varier pour s'adapter à la courbure du palonnier rectangulaire 4. Sur la figure 9, l'angle entre la tige filetée 13 et la face inférieure 6 prennent trois valeurs différentes θ1, θ2, θ3.

Le dispositif stabilisateur 8 peut comprendre deux paires 24 de bras escamotables 25. Les deux paires 24 sont disposées chacune à une extrémité longitudinale 26, 27 du palonnier rectangulaire 4. Ainsi, une paire 24 est disposée à l'extrémité longitudinale 26 et l'autre paire 24 est disposée à l'extrémité longitudinale 27.

Les bras escamotables 25 de chacune des deux paires 24 s'écartent l'un par rapport à l'autre, de part et d'autre du plan central de symétrie 28 du palonnier rectangulaire 4. Chacun des bras escamotables 25 de chacune des deux paires 24 est configuré pour se trouver alternativement dans une position déployée dans laquelle le bras escamotable 25 dépasse latéralement le palonnier rectangulaire 4 et une position escamotée dans laquelle le bras escamotable 25 ne dépasse pas latéralement le palonnier rectangulaire 4. Chacun des bras escamotables 25 comporte une extrémité libre 29 destinée à être posée sur un dispositif référentiel de positionnement 9 d'une plateforme d'assemblage 10 lorsque chacun des bras escamotables 25 se trouve dans la position déployée en vue d'un assemblage du corps de fuselage 3. L'extrémité libre 29 de chacun des bras escamotables 25 présente une forme permettant l'absence de jeu entre ladite extrémité libre 29 et le dispositif référentiel de positionnement 9 sur lequel elle est destinée à être posée. Chacun des bras escamotables 25 peut présenter au moins une première partie 251 montée coulissant au palonnier rectangulaire 4, une deuxième partie 252 présentant un axe longitudinal perpendiculaire au palonnier rectangulaire 4 et une troisième partie 253 liant la première partie 251 et la deuxième partie 252 (figure 3). La deuxième partie 252 comporte l'extrémité libre 29 destinée à être posée sur un dispositif référentiel de positionnement 9 d'une plateforme d'assemblage 10. La troisième partie 253 peut présenter un axe longitudinal faisant un angle aigu par rapport à la face inférieure 6 du palonnier rectangulaire 4 en s'écartant du plan central de symétrie 28. La première partie 251 et la deuxième partie 252 sont disposées chacune à une extrémité longitudinale de la troisième partie 253. Ainsi, l'extrémité libre 29 de tous les bras escamotables 25 se situe sensiblement dans un plan commun. Ce plan commun se situe sous la face inférieure 6 du palonnier rectangulaire 4, la troisième partie 253 s'étendant vers le bas depuis le palonnier rectangulaire 4.

Par ailleurs, chacun des bras escamotables 25 peut passer d'une position déployée à une position escamotée et vice-versa par coulissement du bras par rapport au palonnier rectangulaire 4.

Pour cela, comme représenté sur la figure 2, la figure 3 et la figure 10, le palonnier rectangulaire 4 comprendre des rails 254 fixés sur deux côtés du palonnier rectangulaire 4 situés aux extrémités longitudinales 26, 27. Les rails 254 sont sensiblement parallèles à la face inférieure 6 du palonnier rectangulaire 4. Chacun des bras escamotables 25 comprend au moins une coulisse 255 fixée sur la première partie 251 dudit bras escamotable 25. La ou les coulisses 255 de chacun des bras escamotables 25 sont destinées à coulisser sur au moins un rail parmi les rails 254 fixés au palonnier rectangulaire 4 pour passer de la position déployée à la position escamotée et vice-versa.

Avantageusement, chacun des bras escamotables 25 comprend un dispositif de blocage 30 configuré pour bloquer chacun des bras escamotables 25 alternativement dans la position escamotée ou dans la position déployée. Comme représenté sur la figure 3 et la figure 10, le dispositif de blocage 30 peut correspondre à une tige. Afin de bloquer un bras escamotable 25 dans une position, la tige est introduite dans un premier trou agencé à travers le bras escamotable 25 et un deuxième trou agencé dans le palonnier rectangulaire 4.

Chacun des dispositifs de fixation 11 peut aussi comprendre une cible laser 31 configurée pour recevoir un faisceau laser d'alignement émis par d'un système d'alignement par laser destiné à évaluer une position de chaque élément de fixation 12 de chacun des dispositifs de fixation 11 (figure 3).

Le palonnier rectangulaire 4 peut comprendre une grille rectangulaire 40 et une structure de renforcement 43 (figure 6).

La grille rectangulaire 40 comporte des barres de trame 41 parallèle à la direction transversale du palonnier rectangulaire 4 et des barres de chaîne 42 parallèle à la direction longitudinale du palonnier rectangulaire 4 (figure 1).

La structure de renforcement 43 fait saillie sur la face supérieure 5 du palonnier rectangulaire 4. La structure de renforcement 43 comporte des barres en forme de U 44 s'étendant entre les deux extrémités longitudinales 26, 27 du palonnier rectangulaire 4. La forme de U présente une ouverture dirigée vers la grille rectangulaire 40. Chacune des barres en forme de U 44 est alignée verticalement avec une barre de chaîne 42 de la grille rectangulaire 40. Chacune des barres en forme de U 44 est fixée à la grille rectangulaire 40 à l'aide d'entretoises 45 à chaque croisement entre les barres de trame 41 et les barres de chaîne 42 de la grille rectangulaire 40. La structure de renforcement 43 permet de contribuer à limiter la courbure du palonnier rectangulaire 4 sous l'effet de sa propre masse et/ou de la masse de la grille de plancher 2 attachée au palonnier rectangulaire 4. Avantageusement, les dispositifs de fixation 11 sont placés aux croisements entre les barres de trame 41 et les barres de chaîne 42 de la grille rectangulaire 40.

L'invention concerne également un procédé de calibration du système de transport 1.

Le procédé comprend les étapes suivantes :
- une étape E1 d'installation du système de transport 1 sur les dispositifs référentiels de positionnement 9 par l'intermédiaire du dispositif stabilisateur 8,
- une étape E2 d'évaluation de la position de l'élément de fixation 12 de chacun des dispositifs de fixation 11,
- une étape E3 de comparaison des positions évaluées dans l'étape d'évaluation avec des positions évaluées à partir d'une simulation numérique simulant le palonnier rectangulaire 4 déformé par sa propre masse à vide,
- une étape E4 de réglage de la longueur d'ajustement L de chacun des dispositifs de fixation 11 à partir d'une simulation numérique simulant le système de transport 1 déformé par sa propre masse à vide et par la grille de plancher 2 attachée au palonnier rectangulaire 4,
- une étape E5 d'attache de la grille de plancher 2 au système de transport 1 par l'intermédiaire des éléments de fixation 12,
- une étape E6 d'évaluation de la position de l'élément de fixation 12 de chacun des dispositifs de fixation 11,
- une étape E7 d'ajustement de la longueur d'ajustement L d'au moins un dispositif de fixation 11 si l'étape E6 d'évaluation indique l'élément de fixation 12 de tous les dispositifs de fixation 11 ne se trouve pas dans un plan commun horizontal.

La simulation numérique peut correspondre à la méthode des éléments finis généralisée (« generalized finite element method » en anglais).

L'étape E1 d'installation du système de transport 1 peut comprendre un déploiement des bras escamotables 25 avant un dépôt de l'extrémité libre 29 de chacun des bras escamotables 25 sur un dispositif référentiel de positionnement 9.

L'étape E2 d'évaluation et l'étape E6 d'évaluation peuvent être mises en œuvre par le système d'alignement par laser émettant un faisceau laser d'alignement sur la cible laser 31 de chacun des dispositifs de fixation 11.

L'invention concerne aussi un procédé d'installation d'une grille de plancher 2 d'aéronef sur des dispositifs référentiels de positionnement 9 d'une plateforme d'assemblage 10 recevant une coque inférieure 32 du corps de fuselage 3 en vue d'un assemblage du corps de fuselage 3 à l'aide d'un système de transport 1 (figure 12).

Le procédé comprend les étapes suivantes :
- une étape S1 de mise à disposition de la grille de plancher 2,
- une étape S3 de fixation de la grille de plancher 2 à la pluralité de dispositifs de fixation 11,
- une étape S4 d'installation du dispositif stabilisateur 8 du système de transport 1 auquel est fixée la grille de plancher 2 sur les dispositifs référentiels de positionnement 3 de la plateforme d'assemblage 10 recevant la coque inférieure 32. Le procédé peut aussi comprendre une étape S2 de calibration du système de transport 1 selon le procédé de calibration du système de transport 1.

L'étape S2 de calibration peut ne pas être mise en œuvre systématiquement pour chaque grille de plancher 2 que le système de transport 1 est amené à transporter.

Par exemple, l'étape S2 de calibration peut être mise en œuvre régulièrement après un nombre prédéterminé de grilles de plancher 2 transportées par le système de transport 1.

## Revendications

1. Système de transport (1) de grille de plancher (2) d'aéronef destiné à manipuler une grille de plancher (2) d'un aéronef (AC) en vue d'un assemblage d'un corps de fuselage (3), ledit système de transport comprenant au moins :
- un palonnier rectangulaire (4) comprenant une face supérieure (5) et une face inférieure (6), le palonnier rectangulaire (4) présentant deux extrémités longitudinales (26, 27) ;
- un dispositif stabilisateur (8) configuré pour être associé à des dispositifs référentiels de positionnement (9) d'une plateforme d'assemblage (10), le dispositif stabilisateur étant fixé et réparti aux deux extrémités longitudinales (26, 27) du palonnier rectangulaire (4) ;
- une pluralité de dispositifs de fixation (11) répartis sur la face inférieure (6) du palonnier rectangulaire (4) configurés pour fixer la grille de plancher (2) au palonnier rectangulaire (4), chacun des dispositifs de fixation (11) comprenant un élément de fixation (12) destiné à être fixé à la grille de plancher (2), ledit système de transport étant **caractérisé en ce que** chacun des dispositifs de fixation (11) présente une longueur d'ajustement (L) entre l'élément de fixation (12) et la face inférieure (6) du palonnier rectangulaire (4) réglable verticalement.

2. Système selon la revendication 1,
**caractérisé en ce que** chacun des dispositifs de fixation (11) comprend en outre :
- une tige filetée (13) présentant un axe longitudinal (19) et traversant de part en part le palonnier rectangulaire (4), la tige filetée (13) présentant une première extrémité (14) faisant saillie sur la face supérieure (5) du palonnier rectangulaire (4) et une deuxième extrémité (15) faisant saillie sur la face inférieure (6), la deuxième extrémité (15) étant liée à l'élément de fixation (12),
- un palier fileté (17) immobile selon un axe perpendiculaire au palonnier rectangulaire (4), la tige filetée (13) étant vissée dans le palier fileté (17),
- un écrou de réglage (18) vissé et solidaire à la première extrémité (14) de la tige filetée (13) ;
la longueur d'ajustement (L) étant réglable verticalement par une rotation de l'écrou de réglage (18) entraînant une rotation de la tige filetée (13) autour de son axe longitudinal (19), la rotation de la tige filetée (13) vissée dans le palier fileté (17) entraînant un déplacement de la tige filetée (13) selon son axe longitudinal (19), ledit déplacement de la tige filetée (13) entraînant le déplacement l'élément de fixation (12) par rapport à la face inférieure (6) du palonnier rectangulaire (4).

3. Système selon la revendication 2,
**caractérisé en ce que** chacun des dispositifs de fixation (11) comprend en outre un joint à rotule (16) liant la deuxième extrémité (15) de la tige filetée (13) à l'élément de fixation (12).

4. Système selon l'une quelconque des revendications 1 à 3,
**caractérisé en ce que** chacun des dispositifs de fixation (11) comprend en outre :
- un manchon cylindrique (20) traversant perpendiculairement de part en part le palonnier rectangulaire (4), la tige filetée (13) étant logée dans le manchon cylindrique (20), et
- une rotule (21) disposée sur un épaulement (22) agencé dans le manchon cylindrique (20) et présentant un centre (23) autour duquel la rotule (21) est apte à entrer en rotation, la rotule (21) étant traversée par le palier fileté (17), la rotule (21) autorisant un mouvement de la tige filetée (13) autour du centre (23) de la rotule (21), ledit mouvement étant limité par le manchon cylindrique (20).

5. Système selon l'une quelconque des revendications 1 à 4,
**caractérisé en ce que** le dispositif stabilisateur (8) comprend deux paires (24) de bras escamotables (25) disposées chacune à une extrémité longitudinale (26, 27) du palonnier rectangulaire (4), les bras escamotables (25) de chacune des deux paires (24) de bras s'écartant l'un par rapport à l'autre, de part et d'autre d'un plan central de symétrie (28), chacun des bras escamotables (25) de chacune des deux paires (24) étant configuré pour se trouver alternativement dans une position déployée dans laquelle le bras escamotable (25) dépasse latéralement du palonnier rectangulaire (4) et une position escamotée dans laquelle le bras escamotable (25) ne dépasse pas latéralement du palonnier rectangulaire (4), chacun des bras escamotables (25) comportant une extrémité libre (29) destinée à être posée sur un dispositif référentiel de positionnement (9) d'une plateforme d'assemblage (10) lorsque chacun des bras escamotables (25) se trouve dans la position déployée en vue d'un assemblage du corps de fuselage (3).

6. Système selon la revendication 5,
**caractérisé en ce que** chacun des bras escamotables (25) présente au moins une première partie (251) montée coulissant au palonnier rectangulaire (4), une deuxième partie (252) présentant un axe longitudinal perpendiculaire au palonnier rectangulaire (4) et une troisième partie (253) liant la première partie (251) et la deuxième partie (252), la deuxième partie (252) comportant l'extrémité libre (29) destinée à être posée sur un dispositif référentiel de positionnement (9) d'une plateforme d'assemblage (10).

7. Système selon la revendication 6,
**caractérisé en ce que** le palonnier rectangulaire (4) comprend des rails (254) fixés sur deux côtés du palonnier rectangulaire (4) aux extrémités longitudinales (26, 27), les rails (254) étant parallèles à la face inférieure (6) du palonnier rectangulaire (4), chacun des bras escamotables (25) comprend au moins une coulisse (255) fixée sur la première partie (251), la ou les coulisses (255) de chacun des bras escamotables (25) étant destinées à coulisser sur au moins un rail parmi les rails (254) fixés au palonnier rectangulaire (4) pour passer de la position déployée à la position escamotée et vice-versa.

8. Système selon l'une quelconque des revendications 5 à 7,
**caractérisé en ce que** chacun des bras escamotables (25) comprend un dispositif de blocage (30) configuré pour bloquer chacun des bras escamotables (25) alternativement dans la position escamotée ou dans la position déployée.

9. Système selon l'une quelconque des revendications 1 à 8,
**caractérisé en ce que** chacun des dispositifs de fixation (11) comprend une cible laser (31) configurée pour recevoir un faisceau laser d'alignement émis par d'un système d'alignement par laser destiné à évaluer une position de chacun élément de fixation (12) de chacun des dispositifs de fixation (11).

10. Système selon l'une quelconque des revendications 1 à 9,
**caractérisé en ce que** le palonnier rectangulaire (4) comprend :
- une grille rectangulaire (40) comportant des barres de trame (41) et des barres de chaîne (42),
- une structure de renforcement (43) qui fait saillie sur la face supérieure (5) du palonnier rectangulaire (4), la structure de renforcement (43) comportant des barres en forme de U (44) s'étendant entre les deux extrémités longitudinales (26, 27), la forme de U présentant une ouverture dirigée vers la grille rectangulaire (40), chacune des barres en forme de U (44) étant alignée verticalement avec une barre de chaîne (42) de la grille rectangulaire (40), chacune des barres en forme de U (44) étant fixée à la grille rectangulaire (40) à l'aide d'entretoises (45) à chaque croisement entre les barres de trame (41) et les barres de chaîne (42) de la grille rectangulaire (40).

11. Procédé de calibration du système de transport de grille de plancher de cabine selon l'une quelconque des revendications 1 à 10,
**caractérisé en ce qu'**il comprend les étapes suivantes :
- une étape (E1) d'installation du système de transport (1) sur les dispositifs référentiels de positionnement (9) par l'intermédiaire du dispositif stabilisateur (8),
- une première étape (E2) d'évaluation de la position de l'élément de fixation (12) de chacun des dispositifs de fixation (11),
- une étape (E3) de comparaison des positions évaluées dans l'étape d'évaluation avec des positions évaluées à partir d'une simulation numérique simulant le palonnier rectangulaire (4) déformé par sa propre masse à vide,
- une étape (E4) de réglage de la longueur d'ajustement (L) de chacun des dispositifs de fixation (11) à partir d'une simulation numérique simulant le système de transport (1) déformé par sa propre masse à vide et par la grille de plancher (2) attachée au palonnier rectangulaire (4),
- une étape (E5) d'attache de la grille de plancher (2) au système de transport (1) par l'intermédiaire des éléments de fixation (12),
- une deuxième (E6) étape d'évaluation de la position de l'élément de fixation (12) de chacun des dispositifs de fixation (11),
- une étape (E7) d'ajustement de la longueur d'ajustement (L) d'au moins un dispositif de fixation (11) si la deuxième étape (E6) d'évaluation indique l'élément de fixation (12) de tous les dispositifs de fixation (11) ne se trouve pas dans un plan commun horizontal.

12. Procédé selon la revendication 11,
**caractérisé en ce que** l'étape (E1) d'installation du système de transport (1) comprend un déploiement des bras escamotables (25) avant un dépôt de l'extrémité libre (29) de chacun des bras escamotables (25) sur un dispositif référentiel de positionnement (9).

13. Procédé selon l'une quelconque des revendications 11 et 12,
**caractérisé en ce que** la première étape (E2) d'évaluation et la deuxième étape (E6) d'évaluation sont mises en œuvre par le système d'alignement par laser émettant un faisceau laser d'alignement sur la cible laser (31) de chacun des dispositifs de fixation (11).

14. Procédé d'installation d'une grille de plancher (2) d'aéronef sur des dispositifs référentiels de positionnement (3) d'une plateforme d'assemblage (10) recevant une coque inférieure (32) d'un corps de fuselage (3) en vue d'un assemblage du corps de fuselage (3) à l'aide d'un système de transport (1) selon l'une quelconque des revendications 1 à 10, ledit procédé utilisant ledit système de transport (1) étant
**caractérisé en ce qu'**il comprend les étapes suivantes :
- une étape (S1) de mise à disposition de la grille de plancher (2),
- une étape (S3) de fixation de la grille de plancher (2) à la pluralité de dispositifs de fixation (11),
- une étape (S4) d'installation du dispositif stabilisateur (8) du système de transport (1) auquel est fixée la grille de plancher (2) sur les dispositifs référentiels de positionnement (3) de la plateforme d'assemblage (10) recevant la coque inférieure (32).

15. Procédé selon la revendication 14,
**caractérisé en ce qu'**il comprend en outre une étape (S2) de calibration du système de transport (1) selon le procédé de calibration du système de transport selon l'une quelconque des revendications 11 à 13.

## Patentansprüche

1. Transportsystem (1) eines Bodengitters (2) eines Flugzeugs, das dazu vorgesehen ist, ein Bodengitter (2) eines Flugzeugs (AC) zum Zusammenbau eines Rumpfkörpers (3) zu handhaben, wobei das Transportsystem mindestens umfasst:
- eine rechteckige Traverse (4), die eine obere Seite (5) und eine untere Seite (6) umfasst, wobei die rechteckige Traverse (4) zwei Längsenden (26, 27) aufweist;
- eine Stabilisierungsvorrichtung (8), die konfiguriert ist, um einer der Positionierungsreferenzvorrichtungen (9) einer Zusammenbauplattform (10) zugeordnet zu sein, wobei die Stabilisierungsvorrichtung an den zwei Längsenden (26, 27) der rechteckigen Traverse (4) befestigt und verteilt ist;
- eine Vielzahl von Befestigungsvorrichtungen (11), die auf der unteren Seite (6) der rechteckigen Traverse (4) verteilt sind und konfiguriert sind, um das Bodengitter (2) an der rechteckigen Traverse (4) zu befestigen, wobei jede der Befestigungsvorrichtungen (11) ein Befestigungselement (12) umfasst, das dazu vorgesehen ist, am Bodengitter (2) befestigt zu werden, wobei das Transportsystem **dadurch gekennzeichnet ist, dass** jede der Befestigungsvorrichtungen (11) eine Anpassungslänge (L) zwischen dem Befestigungselement (12) und der unteren Seite (6) der rechteckigen Traverse (4) aufweist, die vertikal einstellbar ist.

2. System nach Anspruch 1,
**dadurch gekennzeichnet, dass** jede der Befestigungsvorrichtungen (11) weiter umfasst:
- eine Gewindestange (13), die eine Längsachse (19) aufweist und die gesamte rechteckige Traverse (4) durchquert, wobei die Gewindestange (13) ein erstes Ende (14), das auf der oberen Seite (5) der rechteckigen Traverse (4) hervorsteht, und ein zweites Ende (15), das auf der unteren Seite (6) hervorsteht, aufweist, wobei das zweite Ende (15) mit dem Befestigungselement (12) verbunden ist,
- ein Gewindelager (17), das entlang einer Achse senkrecht zur rechteckigen Traverse (4) unbeweglich ist, wobei die Gewindestange (13) im Gewindelager (17) eingeschraubt ist,
- eine Einstellmutter (18), die eingeschraubt und fest mit dem ersten Ende (14) der Gewindestange (13) verbunden ist;
wobei die Anpassungslänge (L) durch eine Drehung der Einstellmutter (18), die eine Drehung der Gewindestange (13) um ihre Längsachse (19) herum bewirkt, vertikal einstellbar ist, wobei die Drehung der im Gewindelager (17) eingeschraubten Gewindestange (13) eine Verschiebung der Gewindestange (13) entlang ihrer Längsachse (19) bewirkt, wobei die Verschiebung der Gewindestange (13) die Verschiebung des Befestigungselements (12) in Bezug auf die untere Seite (6) der rechteckigen Traverse (4) bewirkt.

3. System nach Anspruch 2,
**dadurch gekennzeichnet, dass** jede der Befestigungsvorrichtungen (11) weiter eine Gelenkverbindung (16) umfasst, die das zweite Ende (15) der Gewindestange (13) mit dem Befestigungselement (12) verbindet.

4. System nach einem der Ansprüche 1 bis 3,
**dadurch gekennzeichnet, dass** jede der Befestigungsvorrichtungen (11) weiter umfasst:
- eine zylindrische Muffe (20), die die gesamte rechteckige Traverse (4) senkrecht durchquert, wobei die Gewindestange (13) in der zylindrischen Muffe (20) aufgenommen ist, und
- ein Kugelgelenk (21), das auf einer in der zylindrischen Muffe (20) eingerichteten Schulter (22) angeordnet ist und einen Mittelpunkt (23) aufweist, um den herum das Kugelgelenk (21) sich drehen kann, wobei das Kugelgelenk (21) vom Gewindelager (17) durchquert wird, wobei das Kugelgelenk (21) eine Bewegung der Gewindestange (13) um den Mittelpunkt (23) des Kugelgelenks (21) herum ermöglicht, wobei die Bewegung durch die zylindrische Muffe (20) eingeschränkt wird.

5. System nach einem der Ansprüche 1 bis 4,
**dadurch gekennzeichnet, dass** die Stabilisierungsvorrichtung (8) zwei Paare (24) einziehbarer Arme (25) umfasst, die jeweils an einem Längsende (26, 27) der rechteckigen Traverse (4) angeordnet sind, wobei die einziehbaren Arme (25) jedes der zwei Paare (24) von Armen sich in Bezug zueinander beiderseits einer mittleren Symmetrieebene (28) spreizen, wobei jeder der einziehbaren Arme (25) jedes der zwei Paare (24) konfiguriert ist, um sich abwechselnd in einer ausgefahrenen Position, in der der einziehbare Arm (25) über die rechteckige Traverse (4) seitlich herausragt, und einer eingezogenen Position, in der der einziehbare Arm (25) über die rechteckige Traverse (4) seitlich nicht herausragt, zu befinden, wobei jeder der einziehbaren Arme (25) ein freies Ende (29) umfasst, das dazu vorgesehen ist, auf einer Positionierungsreferenzvorrichtung (9) einer Zusammenbauplattform (10) gelegt zu werden, wenn sich jeder der einziehbaren Arme (25) in der ausgefahrenen Position zum Zusammenbau des Rumpfkörpers (3) befindet.

6. System nach Anspruch 5,
**dadurch gekennzeichnet, dass** jeder der einziehbaren Arme (25) mindestens einen ersten Teil (251), der gleitend an der rechteckigen Traverse (4) montiert ist, einen zweiten Teil (252), der eine Längsachse senkrecht zur rechteckigen Traverse (4) aufweist, und einen dritten Teil (253) aufweist, der den ersten Teil (251) und den zweiten Teil (252) verbindet, wobei der zweite Teil (252) ein freies Ende (29) umfasst, das dazu vorgesehen ist, auf einer Positionierungsreferenzvorrichtung (9) einer Zusammenbauplattform (10) gelegt zu werden.

7. System nach Anspruch 6,
**dadurch gekennzeichnet, dass** die rechteckige Traverse (4) Schienen (254) umfasst, die auf zwei Seiten der rechteckigen Traverse (4) an den Längsenden (26, 27) befestigt sind, wobei die Schienen (254) parallel zur unteren Seite (6) der rechteckigen Traverse (4) sind, wobei jeder der einziehbaren Arme (25) mindestens eine Führungsschiene (255) umfasst, die auf dem ersten Teil (251) befestigt ist, wobei die Führungsschiene oder die Führungsschienen (255) jedes der einziehbaren Arme (25) dazu vorgesehen sind, auf mindestens einer Schiene unter den an der rechteckigen Traverse (4) befestigten Schienen (254) zu gleiten, um von der ausgefahrenen Position in die eingezogene Position überzugehen und umgekehrt.

8. System nach einem der Ansprüche 5 bis 7,
**dadurch gekennzeichnet, dass** jeder der einziehbaren Arme (25) eine Sperrvorrichtung (30) umfasst, die konfiguriert ist, um jeden der einziehbaren Arme (25) abwechselnd in der eingezogenen Position oder in der ausgefahrenen Position zu sperren.

9. System nach einem der Ansprüche 1 bis 8,
**dadurch gekennzeichnet, dass** jede der Befestigungsvorrichtungen (11) ein Laserziel (31) umfasst, das konfiguriert ist, um einen von einem Ausrichtungssystem per Laser emittierten Ausrichtungslaserstrahl zu empfangen, der dazu vorgesehen ist, eine Position jedes Befestigungselements (12) jeder der Befestigungsvorrichtungen (11) auszuwerten.

10. System nach einem der Ansprüche 1 bis 9,
**dadurch gekennzeichnet, dass** die rechteckige Traverse (4) umfasst:
- ein rechteckiges Gitter (40), das Schussbalken (41) und Kettenbalken (42) umfasst,
- eine Verstärkungsstruktur (43), die auf der oberen Seite (5) der rechteckigen Traverse (4) hervorsteht, wobei die Verstärkungsstruktur (43) U-förmige Balken (44) umfasst, die sich zwischen den zwei Längsenden (26, 27) erstrecken, wobei die U-Form eine zum rechteckigen Gitter (40) gerichtete Öffnung aufweist, wobei jeder der U-förmigen Balken (44) vertikal mit einem Kettenbalken (42) des rechteckigen Gitters (40) ausgerichtet ist, wobei jeder der U-förmigen Balken (44) mithilfe von Abstandhaltern (45) an jeder Kreuzung zwischen den Schussbalken (41) und den Kettenbalken (42) des rechteckigen Gitters (40) am rechteckigen Gitter (40) befestigt ist.

11. Verfahren zur Kalibrierung des Transportsystems eines Kabinenbodengitters nach einem der Ansprüche 1 bis 10,
**dadurch gekennzeichnet, dass** es die folgenden Schritte umfasst:
- einen Schritt (E1) der Installation des Transportsystems (1) auf den Positionierungsreferenzvorrichtungen (9) durch die Stabilisierungsvorrichtung (8),
- einen ersten Schritt (E2) der Auswertung der Position des Befestigungselements (12) jeder der Befestigungsvorrichtungen (11),
- einen Schritt (E3) des Vergleichs der im Schritt der Auswertung ausgewerteten Positionen mit ausgehend von einer numerischen Simulation ausgewerteten Positionen, die die durch ihre eigene Masse im Vakuum verformte rechteckige Traverse (4) simuliert,
- einen Schritt (E4) der Einstellung der Anpassungslänge (L) jeder der Befestigungsvorrichtungen (11) ausgehend von einer numerischen Simulation, die das durch seine eigene Masse im Vakuum und durch das an der rechteckigen Traverse (4) angebrachte Bodengitter (2) verformte Transportsystem (1) simuliert,
- einen Schritt (E5) der Anbringung des Bodengitters (2) am Transportsystem (1) durch Befestigungselemente (12),
- einen zweiten Schritt (E6) der Auswertung der Position des Befestigungselements (12) jeder der Befestigungsvorrichtungen (11),
- einen Schritt (E7) der Anpassung der Anpassungslänge (L) mindestens einer Befestigungsvorrichtung (11), wenn der zweite Schritt (E6) der Auswertung angibt, dass das Befestigungselement (12) aller Befestigungsvorrichtungen (11) sich nicht in einer gemeinsamen horizontalen Ebene befindet.

12. Verfahren nach Anspruch 11,
**dadurch gekennzeichnet, dass** der Schritt (E1) der Installation des Transportsystems (1) ein Ausfahren der einziehbaren Arme (25) vor einem Ablegen des freien Endes (29) jedes der einziehbaren Arme (25) auf einer Positionierungsreferenzvorrichtung (9) umfasst.

13. Verfahren nach einem der Ansprüche 11 und 12,
**dadurch gekennzeichnet, dass** der erste Schritt (E2) der Auswertung und der zweite Schritt (E6) der Auswertung durch das Ausrichtungssystem per Laser eingesetzt werden, das einen Laserausrichtungsstrahl auf das Laserziel (31) jeder der Befestigungsvorrichtungen (11) emittiert.

14. Verfahren zur Installation eines Bodengitters (2) eines Flugzeugs auf Positionierungsreferenzvorrichtungen (3) einer Zusammenbauplattform (10), die eine untere Schale (32) eines Rumpfkörpers (3) zum Zusammenbau des Rumpfkörpers (3) mithilfe eines Transportsystems (1) nach einem der Ansprüche 1 bis 10 aufnimmt, wobei das Verfahren, das das Transportsystem (1) verwendet, **dadurch gekennzeichnet ist, dass** es die folgenden Schritte umfasst:
- einen Schritt (S1) der Bereitstellung des Bodengitters (2),
- einen Schritt (S3) der Befestigung des Bodengitters (2) an der Vielzahl von Befestigungsvorrichtungen (11),
- einen Schritt (S4) der Installation der Stabilisierungsvorrichtung (8) des Transportsystems (1), an dem das Bodengitter (2) befestigt ist, auf den Positionierungsreferenzvorrichtungen (3) der Zusammenbauplattform (10), die die untere Schale (32) aufnimmt.

15. Verfahren nach Anspruch 14,
**dadurch gekennzeichnet, dass** es weiter einen Schritt (S2) der Kalibrierung des Transportsystems (1) nach dem Verfahren zur Kalibrierung des Transportsystems nach einem der Ansprüche 11 bis 13 umfasst.

## Claims

1. System (1) for transporting an aircraft floor grid (2) intended to manipulate a floor grid (2) of an aircraft (AC) to assemble a fuselage barrel (3),
said transporting system comprising at least:
- a rectangular spreader (4) having an upper face (5) and a lower face (6), the rectangular spreader (4) having two longitudinal ends (26, 27);
- a stabilizer device (8) configured to be associated with referential positioning devices (9) of an assembly platform (10), the stabilizer device being located at and fixed to the two longitudinal ends (26, 27) of the rectangular spreader (4);
- a plurality of fixing devices (11) distributed over the lower face (6) of the rectangular spreader (4) and configured for fixing the floor grid (2) to the rectangular spreader (4), each of the fixing devices (11) including a fixing element (12) intended to be fixed to the floor grid (2),
said transporting system being **characterized in that** each of the fixing devices (11) has an adjustment length (L) between the fixing element (12) and the lower face (6) of the rectangular spreader (4) that is adjustable vertically.

2. System as claimed in claim 1,
**characterized in that** each of the fixing devices (11) further includes:
- a threaded rod (13) having a longitudinal axis (19) and passing completely through the rectangular spreader (4), the threaded rod (13) having a first end (14) projecting on the upper face (5) of the rectangular spreader (4) and a second end (15) projecting on the lower face (6), the second end (15) being connected to the fixing element (12),
- a threaded bearing (17) immobile along an axis perpendicular to the rectangular spreader (4), the threaded rod (13) being screwed into the threaded bearing (17),
- an adjuster screw (18) screwed onto and fastened to the first end (14) of the threaded rod (13);
the adjustment length (L) being adjustable vertically by rotation of the adjustment nut (18) driving rotation of the threaded rod (13) about its longitudinal axis (19), rotation of the threaded rod (13) screwed into the threaded bearing (17) driving movement of the threaded rod (13) along its longitudinal axis (19), said movement of the threaded rod (13) driving movement of the fixing element (12) relative to the lower face (6) of the rectangular spreader (4).

3. System as claimed in claim 2,
**characterized in that** each of the fixing devices (11) further includes a ball joint (16) connecting the second end (15) of the threaded rod (13) to the fixing element (12).

4. System as claimed in any one of claims 1 to 3,
**characterized in that** each of the fixing devices (11) further includes:
- a cylindrical sleeve (20) passing perpendicularly and completely through the rectangular spreader (4), the threaded rod (13) being housed in the cylindrical sleeve (20), and
- a ball (21) disposed on a shoulder (22) in the cylindrical sleeve (20) and having a center (23) about which the ball (21) is able to rotate, the ball (21) having the threaded bearing (17) pass through it, the ball (21) allowing movement of the threaded rod (13) about the center (23) of the ball (21), said movement being limited by the cylindrical sleeve (20).

5. System as claimed in any one of claims 1 to 4,
**characterized in that** the stabilizer device (8) includes two pairs (24) of retractable arms (25) each disposed at a longitudinal end (26, 27) of the rectangular spreader (4), the retractable arms (25) of each of the two pairs (24) of arms being spaced from one another on either side of a central plane of symmetry (28), each of the retractable arms (25) of each of the two pairs (24) being configured to be located alternately in a deployed position in which the retractable arm (25) projects laterally from the rectangular spreader (4) and a retracted position in which the retractable arm (25) does not project laterally from the rectangular spreader (4), each of the retractable arms (25) having a free end (29) intended to be placed on a referential positioning device (9) of an assembly platform (10) when each of the retractable arms (25) is in the deployed position for assembly of the fuselage barrel (3).

6. System as claimed in claim 5,
**characterized in that** each of the retractable arms (25) includes at least a first part (251) mounted to slide on the rectangular spreader (4), a second part (252) having a longitudinal axis perpendicular to the rectangular spreader (4) and a third part (253) connecting the first part (251) and the second part (252), the second part (252) including the free end (29) intended to be placed on a referential positioning device (9) of an assembly platform (10).

7. System as claimed in claim 6,
**characterized in that** the rectangular spreader (4) includes rails (254) fixed to two sides of the rectangular spreader (4) at the longitudinal ends (26, 27), the rails (254) being parallel to the lower face (6) of the rectangular spreader (4), and each of the retractable arms (25) includes at least one slider (255) fixed to the first part (251), the slider or sliders (255) of each of the retractable arms (25) being intended to slide on at least one of the rails (254) fixed to the rectangular spreader (4) to go from the deployed position to the retracted position and vice versa.

8. System as claimed in any one of claims 5 to 7,
**characterized in that** each of the retractable arms (25) includes an immobilizer device (30) configured to immobilize the retractable arms (25) alternately in the retracted position or the deployed position.

9. System as claimed in any one of claims 1 to 8,
**characterized in that** each of the fixing devices (11) includes a laser target (31) configured to receive an alignment laser beam emitted by a laser alignment system intended to evaluate the position of each fixing element (12) of each of the fixing devices (11).

10. System as claimed in any one of claims 1 to 9,
**characterized in that** the rectangular spreader (4) includes:
- a rectangular grid (40) including weft bars (41) and warp bars (42),
- a reinforcing structure (43) that projects on the upper face (5) of the rectangular spreader (4), the reinforcing structure (43) including U-shaped bars (44) extending between the two longitudinal ends (26, 27), the U-shape having an opening directed toward the rectangular grid (40), each of the U-shaped bars (44) being aligned vertically with a warp bar (42) of the rectangular grid (40), each of the U-shaped bars (44) being fixed to the rectangular grid (40) with the aid of spacers (45) at each crossover between the weft bars (41) and the warp bars (42) of the rectangular grill (40).

11. Method of calibrating the cabin floor grid transport system as claimed in any one of claims 1 to 10,
**characterized in that** it comprises the following steps:
- a step (E1) of installing the transport system (1) on the referential positioning devices (9) by means of the stabilizer device (8),
- a first evaluation step (E2) of evaluating the position of the fixing element (12) of each of the fixing devices (11),
- a step (E3) of comparing positions evaluated in the evaluation step with positions evaluated from a numerical simulation simulating the rectangular spreader (4) deformed by its own weight when not loaded,
- a step (E4) of adjusting the adjustment length (L) of each of the fixing devices (11) on the basis of a numerical simulation simulating the transport system (1) deformed by its own weight when not loaded and by the floor grid (2) attached to the rectangular spreader (4),
- a step (E5) of attaching the floor grid (2) to the transport system (1) by means of the fixing elements (12),
- a second evaluation step (E6) of evaluating the position of the fixing element (12) of each of the fixing devices (11),
- a step (E7) of adjusting the adjustment length (L) of at least one fixing device (11) if the second evaluation step (E6) indicates that the fixing elements (12) of all the fixing devices (11) are not in a common horizontal plane.

12. Method as claimed in claim 11,
**characterized in that** the step (E1) of installing the transport system (1) includes deploying the retractable arms (25) before depositing the free end (29) of each of the retractable arms (25) on a referential positioning device (9).

13. Method as claimed in either one of claims 11 or 12,
**characterized in that** the first evaluation step (E2) and the second evaluation step (E6) are performed by the laser alignment system emitting an alignment laser beam onto the laser target (31) of each of the fixing devices (11).

14. Method of installing an aircraft floor grid (2) on referential positioning devices (3) of an assembly platform (10) receiving a lower shell (32) of a fuselage barrel (3) in order to assemble the fuselage barrel (3) using a transport system (1) as claimed in any one of claims 1 to 10, said method using said transporting system (1) being **characterized in that** it comprises the following steps:
- a step (S1) of procuring the floor grid (2),
- a step (S3) of fixing the floor grid (2) to the plurality of fixing devices (11),
- a step (S4) of installing the stabilizer device (8) of the transport system (1) to which the floor grid (2) is fixed on the referential positioning devices (3) of the assembly platform (10) receiving the lower shell (32).

15. Method as claimed in claim 14,
**characterized in that** it further comprises a step (S2) of calibrating the transport system (1) using the transport system calibration method as claimed in any one of claims 11 to 13.
